# EUROPÄISCHE PATENTSCHRIFT

(11) **EP 0 518 868 B1**
(45) Veröffentlichungstag und Bekanntmachung des Hinweises auf die Patenterteilung: **16.03.1994**
(21) Anmeldenummer: 91902259.0
(22) Anmeldetag: 18.01.1991
(51) Int. Cl.: F02C 3/20, F02C 3/30

(54) **VERFAHREN UND ANLAGE ZUR ERZEUGUNG MECHANISCHER ENERGIE**
PROCESS AND DEVICE FOR GENERATING MECHANICAL ENERGY
PROCEDE ET INSTALLATION POUR LA PRODUCTION D'ENERGIE MECANIQUE

(30) Priorität: 01.02.1990 DE 4003210
(43) Veröffentlichungstag der Anmeldung: 23.12.1992
(73) Patentinhaber: MANNESMANN Aktiengesellschaft, 40027 Düsseldorf (DE); K.T.I. Group B.V., NL-2700 AB Zoetermeer (NL); A.S.A. B.V., NL-3114 EB Schiedam (NL)
(72) Erfinder: ANKERSMIT, Hendrik, Jan, NL-3114 EB Schiedam (NL); HENDRIKS, Rudolf, NL-6881 VN Velp (NL); BLOMEN, Leo, Jozef, Maria, Joannes, NL-2253 VP Voorschoten (NL)
(74) Vertreter: Meissner, Peter E., Dipl.-Ing.
(86) Internationale Anmeldenummer: DE9100064
(87) Internationale Veröffentlichungsnummer: WO9111597

(56) Entgegenhaltungen:
- EP-A- 0 351 094
- DE-A- 1 178 512
- DE-A- 1 228 856
- US-A- 3 167 913
- US-A- 4 242 076
- Revue Générale de Thermique, Band 25, Nr. 289, Januar 1986, (Paris, FR), F. Nandjee et al.:"Nouveaux cycles de turbines à gaz au méthanol", Seiten 19-26

## Beschreibung

Die Erfindung betrifft ein Verfahren zur Erzeugung mechanischer Energie entsprechend dem Oberbegriff des Patentanspruchs 1 sowie eine Vorrichtung zu dessen Durchführung.

In den meisten thermischen Kraftwerken wird zur Erzeugung elektrischer Energie zunächst durch Verbrennung fossiler Brennstoffe in Kesselanlagen überhitzter Dampf erzeugt, der in Dampfturbinen entspannt und dabei in mechanische Energie umgesetzt wird. Die Dampfturbinen sind mit elektrischen Generatoren gekoppelt, so daß diese mechanische Energie in elektrische umgesetzt wird. Letzteres geschieht mit einem Wirkungsgrad von deutlich über 90 %. Dagegen nimmt sich der Wirkungsgrad der Umsetzung der im eingesetzten Brennstoff chemisch gebundenen Energie in mechanische Energie recht bescheiden aus, da der Turbinenwirkungsgrad selbst bei Großturbinen höchstens etwa 37 % beträgt und auch im Heizkessel noch Verluste in Kauf genommen werden müssen. In vielen Fallen konnte daher bisher etwa nur 35 % der bei der Verbrennung frei werdenden Wärme effektiv für die Elektrizitätserzeugung genutzt werden, während etwa 65 % als Abwärme verloren gingen oder nur zu reinen Wärmezwecken benutzt werden konnten.

Eine erhebliche Steigerung des Gesamtwirkungsgrades hat man in jüngerer Zeit dadurch erzielen können, daß man zur Umsetzung der Wärmeenergie in mechanische Energie eine Kombination von Gasturbinen und Dampfturbinen einsetzt, wobei die heißen Verbrennungsgase zunächst auf Gasturbinen entspannt werden und für die Erzeugung des Dampfes für die Dampfturbinen die Wärme des Abgases dieser Gasturbinen benutzt wird. Zusätzliche Verbesserungsmöglichkeiten bestehen darin, daß man den aus einer Dampfturbine abströmenden entspannten Dampf jeweils in die Brennkammer der vorgeschalteten Gasturbine zurückleitet und so einen größeren Volumenstrom zum Antrieb der Gasturbine erzeugt. Diese Maßnahmen haben es ermöglicht, den Gesamtwirkungsgrad der Umwandlung von thermischer Energie in mechanische Energie bei größeren Anlagen (über 50 MW) in eine Größenordnung von etwa 48 bis 50 % zu bringen.

Ein derartiger kombinierter Gas-/Dampfturbinenprozeß geht beispielsweise aus der DE 33 31 153 A1 hervor. Zur Erzeugung der benötigten heißen Verbrennungsgase für die Gasturbine kommen übliche "strömende" Brennstoffe, d.h. flüssige oder gasförmige Kohlenwasserstoffe zum Einsatz. Um die Entstehung von Stickstoffoxiden weitgehend zu vermeiden, wird die Brennkammertemperatur durch Einleitung eines Teils des mit der Wärme des Gasturbinenabgases erzeugten Dampfes in die Brennkammer abgesenkt. Bei einer Gesamtleistung von 300 MW wird für diesen Prozeß der erreichbare Wirkungsgrad mit 48% angegeben.

In der Zeitschrift VGB Kraftwerkstechnik 68 (Nr. 5, Mai 1988, Seite 461 - 468) wird ein kombinierter Gas-/Dampfturbinenprozeß in Verbindung mit einer Kohlevergasung beschrieben. Das in der Kohlevergasung erzeugte brennbare Gas wird nach einer Reinigung zu einem Teil mit verdichteter Luft in einer ersten Brennkammer verbrannt. Die dabei erzeugten heißen Verbrennungsgase werden zunächst zur überhitzung von Wasserdampf für die Kohlevergasung und für die Beheizung der allothermen Kohlevergasung selbst eingesetzt, bevor sie auf einer ersten Gasturbine entspannt werden, die ihrerseits einen Kompressor für die benötigte Verbrennungsluft antreibt. Der andere Teil des in der Kohlevergasung erzeugten brennbaren Gases wird in einer zweiten Brennkammer verbrannt und unmittelbar danach auf einer zweiten Gasturbine entspannt, die mit einem weiteren Kompressor für die in der zweiten Brennkammer benötigte Verbrennungsluft und mit einem elektrischen Generator zur Erzeugung elektrischer Energie mechanisch gekoppelt ist. Das entspannte Turbinenabgas der zweiten Gasturbine wird vor der Ableitung in die Atmosphäre zusammen mit dem entspannten Abgas der ersten Gasturbine (Kompressorantriebsturbine) noch zur Dampferzeugung benutzt. Dieser Dampf wird auf einer Dampfturbine, die ebenfalls mit einem Generator gekoppelt ist, zur Erzeugung elektrischer Energie entspannt. Ein Teil des Dampfes wird nach teilweiser Entspannung aus der Dampfturbine ausgekoppelt und dann nach der bereits erwähnten überhitzung durch die Verbrennungsgase der ersten Brennkammer für die Kohlevergasung verwendet.

Bei dieser bekannten Anlage wird als Ausgangsbrennstoff Kohle eingesetzt, die erst dadurch für einen Gasturbinenprozeß nutzbar gemacht wird, daß sie zuvor vergast wird. Diese Umsetzung ist wegen des bei der Verbrennung entstehenden Ascheanteils, der eine Gasturbine zerstören würde, in technischer Hinsicht zwingend erforderlich. Brennstoffe auf der Basis von Kohlenwasserstoffverbindungen liegen demgegenüber in flüssiger Form oder als Gas vor, enthalten keinen Ascheanteil und sind daher ohne weiteres unmittelbar in einem kombinierten Gas-/Dampfturbinenprozeß einsetzbar. Ein Charakteristikum dieser bekannten Anlage ist es, daß die Verbrennungsgase in zwei zunächst völlig unabhängigen Teilströmen geführt und für unterschiedliche Teilprozesse genutzt werden, bevor sie am Ende des Verfahrens gemeinsam zur Dampferzeugung eingesetzt werden. Der Nettowirkungsgrad dieser Anlage ist mit etwa 42% angegeben, wobei der interne Energiebedarf für die Prozeßführung etwa 7,5% beträgt.

Ein weiterer kombinierter Gas-/Dampfturbinenprozeß zur Erzeugung elektrischer Energie, bei dem zunächst eine Kohlevergasung durchgeführt wird, ist aus der US 4,478,039 bekannt. Dort wird das erzeugte Gas in einer Brennkammer bei Überdruck verbrannt. Die entstehenden heißen Verbrennungsgase werden dann auf einer Gasturbine, die einen elektrischen Generator und einen Kompressor für die Verdichtung der Verbrennungsluft antreibt, entspannt. Das entspannte Turbinenabgas wird zusätzlich noch zur Beheizung der Kohlevergasungsanlage und zur Dampferzeugung für den Dampfturbinenprozeß eingesetzt. Die Dampfturbine treibt ebenfalls einen elektrischen Generator an. über die Nutzung von Ausgangsbrennstoffen auf der Basis von Kohlenwasserstoffverbindungen ist in dieser Schrift nichts ausgesagt.

Ferner ist aus der DE 37 40 865 A1 ein Verfahren und eine Vorrichtung zur Gewinnung von Wasserstoff bekannt, wobei ein gasförmiger Ausgangsbrennstoff, also eine Kohlenwasserstoffverbindung, in einer Dampfreformierung zu einem wasserstoffreichen Gas mit gegenüber dem Mengenstrom des Ausgangsbrennstoffs erhöhtem absoluten Heizwert umgesetzt wird.

Unter dem "absoluten Heizwert" wird hier nicht wie üblich ein auf eine Gewichtseinheit bezogener Heizwert verstanden. Vielmehr ist hiermit die Gesamtmenge an Verbrennungswärme gemeint, die in einer bestimmten Menge des Ausgangsbrennstoffs enthalten ist bzw. in einer Menge des umgewandelten Brennstoffes enthalten ist, die durch endotherme Umsetzung derselben Menge an Ausgangsbrennstoff entstanden ist. Im Falle einer Dampfreformierung wird nämlich durch den bei der Umsetzung zugesetzten Wasserdampfanteil die Gesamtmenge des umgesetzten Brennstoffs zwangsläufig gegenüber der ursprünglichen Menge des Ausgangsbrennstoffs erheblich vergrößert, so daß der gewichtsbezogene Heizwert sogar kleiner ist als vorher, obwohl die bei der Verbrennung des umgesetzten Brennstoffs freisetzbare Wärmemenge größer geworden ist.

Das in diesem Prozeß gem. DE 37 40 865 A1 erzeugte Rohgas wird zur Gewinnung eines reinen Wasserstoffgases in einer Reinigungsstufe (z.B. Druckwechselabsorbtionsanlage) behandelt, in der die Verunreinigungen (z.B. CO, CO₂, H₂O, nicht umgewandelte Kohlenwasserstoffe) abgetrennt und als Abgasstrom abgeführt werden. Dieser brennbare Abgasstrom, der zwangsläufig auch noch gewisse Restanteile des Wasserstoffgases enthält, wird nach Verdichtung in einem Kompressor auf einen höheren Druck als Brenngas z.B. im Heizraum des indirekt beheizten Dampfreformers mit verdichteter Luft verbrannt. Aufgrund der weitgehenden Abtrennung des Wasserstoffs aus dem Rohgas sinkt der absolute Heizwert des Abgasstromes der Reinigungsstufe gegenüber dem absoluten Heizwert des Rohgases erheblich ab und liegt noch unter dem des eingesetzten Ausgangsbrennstoffs. Daher ist es vielfach erforderlich, bei der Beheizung des Dampfreformers einen Teilstrom des Ausgangsbrennstoffs unmittelbar mit zu verbrennen. Das entstehende Verbrennungsabgas wird nach der Beheizung des Dampfreformers als Moderatorgas zur Temperaturabsenkung in eine Brennkammer geführt, in der ein Teilstrom des Ausgangsbrennstoffs mit verdichteter Luft verbrannt wird. Der aus dieser Brennkammer abgeführte Strom der Verbrennungsabgase wird dann auf einer Gasturbine entspannt. Die Gasturbine stellt die in diesem Verfahren benötigte Kompressorantriebsenergie zur Verfügung und ermöglicht darüber hinaus durch einen angeschlossenen Generator auch die Erzeugung elektrischer Energie.

Bei diesem bekannten Verfahren erfolgt die Umwandlung des Ausgangsbrennstoffs an sich nur deswegen, weil die Erzeugung von Wasserstoffgas beabsichtigt ist, das für beliebige Anwendungen außerhalb dieses Verfahrens benötigt wird. Es ergeben sich aus der DE 37 40 865 A1 keinerlei Hinweise darauf, daß eine solche endotherme Brennstoffumwandlung auch dann vorteilhaft sein könnte, wenn der umgewandelte Brennstoff anschließend zum Zweck der Erzeugung mechanischer Energie verbrannt werden soll. Die in diesem bekannten Verfahren angewendete Verbrennung des umgewandelten Brennstoffs wird nämlich lediglich im Sinne einer Verwertung eines Nebenproduktes durchgeführt. Dabei ist als wesentlich festzuhalten, daß bei der Verbrennung nur noch ein Teil der ursprünglich in dem umgewandelten Brennstoff enthaltenen brennbaren Komponenten vorhanden ist, da der Wasserstoffanteil, der den überwiegenden Anteil am absoluten Heizwert ausmacht, vorher weitgehend abgetrennt worden ist. Aus diesem Grunde ist auch das rein rechnerische Verhältnis der erzeugten nutzbaren mechanischen bzw. elektrischen Energie zur Menge der im eingesetzten Ausgangsbrennstoff enthaltenen chemisch gebundenen Energie bei diesem Verfahren mit weniger als 10% äußerst klein.

Aus der gattungsbildenden EP 0 318 122 A2 ist ein Verfahren und eine Anlage zur Erzeugung mechanischer Energie aus gasförmigen Brennstoffen bekannt, in der die z.B. zur Stromerzeugung nutzbare mechanische Energie allein durch eine Gasturbine abgegeben wird. Diese Gasturbine, die insbesondere für einen Leistungsbereich von 50 - 3000 KW vorgesehen ist, erreicht dabei bezogen auf die eingesetzte thermische Energie (unterer Heizwert) einen Wirkungsgrad von etwa 42 %. Hierzu ist vorgesehen, daß zunächst Verbrennungsluft in einem Kompressor verdichtet wird. Die verdichtete Verbrennungsluft wird dann in einem Abgaswärmetauscher aufgeheizt, über eine erste Gasturbine, die nur den Kompressor antreibt, teilweise entspannt und anschließend einer Brennkammer zugeführt, in der Brennstoff mit dieser Verbrennungsluft verbrannt wird. Das bei der Verbrennung entstehende heiße Abgas treibt eine zweite Gasturbine an, die die eigentlich nutzbare mechanische Energie liefert. Das von der zweiten Gasturbine abströmende noch heiße Abgas wird dazu benutzt, den Abgaswärmetauscher für die Aufheizung der komprimierten Verbrennungsluft zu betreiben.

Schließlich ist aus der US 31 67 913 noch eine Anlage bekannt, bei der eine einzige Brennkammer vorgesehen ist, die vor der Kompressorturbine, d.h. dem Hochdruckteil, der gesamten Turbinenanlage angeordnet ist.
Derartige Hochdruckanlagen erfordern, das auch die Brennkammer für hohe Drücke angelegt ist.

Weiterhin werden zur Erhöhung des Turbinenwirkungsgrades hohe Verbrennungstemperaturen angestrebt, so das auch mehr Schadstoffe entstehen. Aufgrund der hohen Verdichtung der Verbrennungsluft stellen sich in der komprimierten Verbrennungsluft hohe Temperaturen ein, was wiederum bei der Planung des Abgaswärmetauschers berücksichtigt werden muß.
Damit erhöhen sich nicht nur die Anlagekosten, sondern es verschlechtert sich auch der Gesamtwirkungsgrad.

Die Aufgabe der vorliegenden Erfindung besteht darin ein verfahren und eine Anlage der gattungsgemäßen Art dahingehend weiterzubilden, daß der wirkungsgrad der Umsetzung der in einem Brennstoff auf Basis von C-H-Verbindungen enthaltenen Energie (unterer Heizwert) in mechanische Energie bei Kleinanlagen (50-3000 KW) über 50 % und bei größeren Anlagen mindestens 55 % beträgt. Im folgenden wird unter Wirkungsgrad immer der "mechanische" Wirkungsgrad, d.h. das Verhältnis der erzeugten nutzbaren mechanischen Energie der Turbine zur eingesetzten Energie des Ausgangsbrennstofss (auf der Basis des unteren Heizwertes Hᵤ) verstanden.

Gelöst wird diese Aufgabe hinsichtlich des Verfahrens durch die kennzeichnenden Merkmale des Patentanspruchs 1. Vorteilhafte Weiterbildungen dieses Verfahrens sind durch die Merkmale der Unteransprüche 2 bis 12 gekennzeichnet. Eine erfindungsgemäße Anlage zur Durchführung dieses Verfahrens weist die Merkmale des Patentanspruchs 13 auf und ist durch die kennzeichnenden Merkmale der Unteransprüche 14 bis 19 in vorteilhafter Weise ausgestallbar.

Ein wesentlicher erfinderischer Schritt ist darin zu sehen, daß die aus der EP 0 318 122 A2 bekannte Anlagenschaltung ergänzt wird durch einen Reaktor für eine endotherme chemische Reaktion, in der der eingesetzte Brennstoff (Ausgangsbrennstoff) umgesetzt wird in einen höherwerligen Brennstoff, der dann schließlich mit der komprimierten Luft aus dem Kompressor verbrannt wird.

Dabei wird die Wärmeenergie zum Betrieb des Reaktors vorzugsweise aus der Abgaswärme des aus der Gasturbine, in der die nutzbare mechanische Energie erzeugt wird, ausströmenden Abgases gewonnen. Zur Beheizung des Reaktors können aber auch andere Heißgasströme des Prozesses herangezogen werden. Im Falle der Abgaswärmenutzung für den Reaktor kann dieses weiter abgekühlte Abgas z.B. in einem Abgaswärmetauscher noch zur Aufheizung der komprimierten Verbrennungsluft eingesetzt werden.

Durch die Umsetzung des Ausgangsbrennstoffs wird erreicht, daß ähnlich wie bei einer Wärmepumpe Abwärme aus dem Abgas der Gasturbine oder ein anderer Wärmestrom gleichsam auf ein höheres "potentielles Temperaturniveau" angehoben wird, so daß diese Wärme technisch besser zu nutzen ist als Wärme mit geringerer Temperatur. Dieses "Anheben" des Temperaturniveaus geschieht dabei in Form eines erhöhten absoluten Heizwertes des bei der Umsetzung in dem Reaktor aus dem ursprünglichen Brennstoff (z.B. Erdgas) gebildeten neuen Brennstoffs (z.B. H₂ und CO).

Das Verfahren und die Anlage gemäß der vorliegenden Erfindung ermöglichen es, die Abwärme, die im Prozeß entsteht, systematisch zu erfassen und in effektiver Weise zu nutzen. Dabei ist es von ganz besonderem Vorteil, die endotherme Reaktion zur Erzeugung des höherwertigen Brennstoffs, die insbesondere als Dampfreformierung z.B. von Erdgas durchgeführt werden kann, bei vergleichsweise geringen Temperaturen auszuführen. üblicherweise wird diese Dampfreformierung in großtechnischem Maßstab nur bei Temperaturen im Bereich 780 - 900°C durchgeführt. Erfindungsgemäß sollte zweckmäßigerweise eine Temperaturobergrenze von 780°C oder besser noch von 700 oder sogar 650°C nicht überschritten werden.

Der Nachteil, daß mit der geringeren Temperatur eine Verschlechterung der Umsatzrate des ursprünglichen Brennstoffs, also eine Erhöhung des Anteils nicht umgewandelten Brennstoffs in Kauf genommen werden muß, wird durch den Vorteil einer verbesserten Nutzung der Abwärme der Gasturbine oder der Wärme eines anderen Heißgasstroms des Prozesses bei der Reaktorbeheizung und einer Verminderung der Temperatur des für die endotherme Reaktion benötigten Frischdampfes mehr als ausgeglichen. Das verminderte Temperaturniveau bringt auch Vorteile für die Kosten einer erfindungsgemäßen Anlage mit sich, da die thermischen Anforderungen an die eingesetzten Werkstoffe geringer sind als beim bisherigen Stand der Technik.

Von ganz besonderer Bedeutung ist auch die Tatsache, daß die Verbrennung des Brennstoffs z.B. durch Eindüsung von Wasser oder Wasserdampf in die Brennkammer bzw. -kammern der Anlage so beeinflußt werden kann, daß Stickoxide nicht oder nur in geringen Mengen entstehen. Dabei wird die Flammentemperatur auf Werte von maximal 1700°C (adiabatische Flammentemperatur) und die Eintrittstemperatur in die Gasturbine auf höchstens 1250°C beschränkt, so daß der Betrieb des erfindungsgemäßen Verfahrens in ungewöhnlich umweltfreundlicher Weise möglich ist, ohne daß es einer kostenaufwendigen Entstickungsanlage bedarf. Dies alles wird möglich durch die erfindungsgemäße Integration der Brennstoffumwandlung und der Erzeugung der mechanischen Energie aus der durch die Verbrennung des Brennstoffs freigesetzten Wärme. Dadurch ist eine so effektive Nutzung von Abwärmeströmen möglich, daß bisher als nicht realisierbar erachtete Wirkungsgrade erreicht werden können. Typische Werte liegen im Bereich 50-70 %, wobei kleinere Anlagen im unteren und größeren Anlagen im oberen Bereich anzusiedeln sind. Die erfindungsgemäßen Anlagen sind in besonderer Weise geeignet zur dezentralen, d.h. verbrauchernahen Erzeugung von Elektrizität und bieten damit den zusätzlichen Vorteil, daß Verluste infolge des Energietransports über größere Entfernungen undloder durch die Transformierung des Stroms weitgehend vermieden werden können. Diese Verluste liegen bei Großkraftwerken erfahrungsgemäß bei etwa 10 % der erzeugten elektrischen Energie.

Für das erfindungsgemäße Verfahren sind zwei Hauptvarianten als besonders bevorzugt anzusehen. In der einen Hauptvariante wird, wie vorstehend bereits geschildert wurde, die komprimierte Verbrennungsluft vor ihrer Einleitung in die Brennkammer in einem Abgaswärmetauscher aufgeheizt, wobei der Abgaswärmetauscher mit dem Abgas der Gasturbine, die die nutzbare mechanische Energie liefert, gespeist wird. Der Abgaswärmetauscher ist vorzugsweise als Rekuperator ausgebildet.

Je größer die in diesem Rekuperator auszutauschende Wärmemenge pro Zeiteinheit wird, umso stärker wächst das Bauvolumen dieses Wärmetauschaggregates an. Bei größeren Anlagen der erfindungsgemäßen Art (im Leistungsbereich ab ca. 50-80 MW) wird der Rekuperator im Vergleich zu den übrigen Anlagenteilen außerordentlich groß und entsprechend kostenaufwendig. Daher empfiehlt sich für die größeren Anlagen die zweite Hauptvariante der Erfindung, bei der auf einen Rekuperator völlig verzichtet wird.

Bei der zweiten Hauptvariante wird das Abgas der Gasturbine (ggf. nach Beheizung des Reaktors für die Brennstoffumsetzung) zur Dampferzeugung benutzt. Dieser Dampf wird durch einen im Prozeß vorhandenen Heißgasstrom überhitzt und dann zur Erzeugung zusätzlicher mechanischer Energie auf einer Dampfturbine entspannt, wie dies aus den sogenannten "Combined Cycle"-Kraftwerken bekannt ist. Der Wirkungsgrad des Prozesses ist bei solchen Großanlagen zwar etwas geringer, als dies bei einer Anlagenausführung gemäß der ersten Hauptvariante grundsätzlich möglich wäre, jedoch ist der Anlagenaufwand bedeutend kleiner.

Im folgenden wird die Erfindung anhand der in den Figuren dargestellten Anlagenschemen näher beschrieben. Es zeigen:
- Fig. 1: eine Anlage mit Rekuperator,
- Fig. 2: eine Anlage mit Dampfturbine.

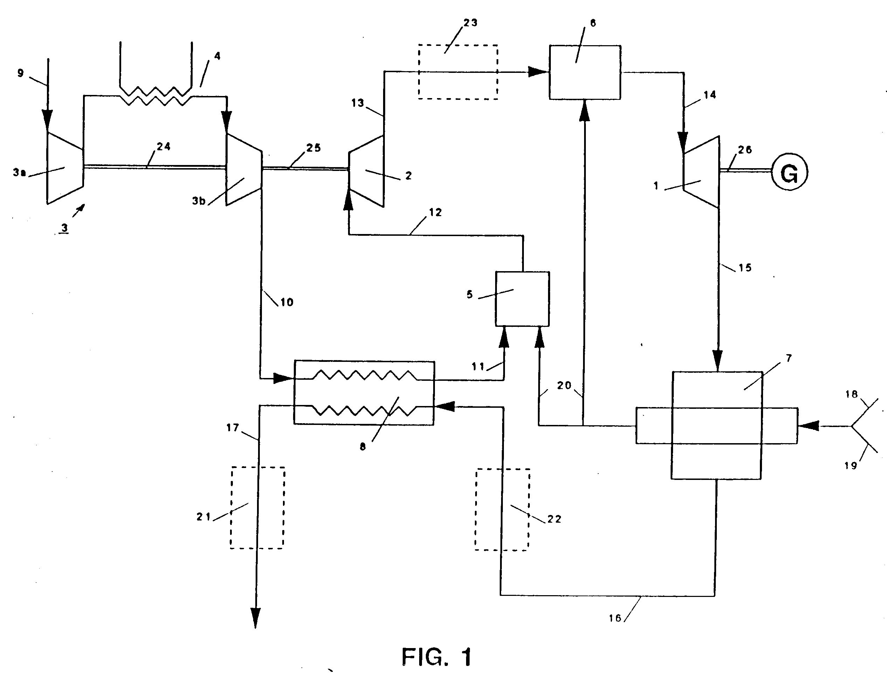

Bei der in Fig. 1 dargestellten Ausführungsform der Erfindung wird durch eine Rohrleitung 9 von einem Kompressor 3a einer Kompressoreinheit 3, die noch einen zweiten Kompressor 3b aufweist, Verbrennungsluft angesaugt. Die verdichtete Verbrennungsluft wird durch einen Kühler 4 zwischengekühlt und dann im zweiten Kompressor 3b auf einen noch höheren Druck verdichtet. Beide Kompressoren 3a, 3b sind mechanisch über die Wellen 24, 25 mit einer Kompressorantrieb-Gasturbineneinheit 2 gekoppelt. Über eine Rohrleitung 10 wird die komprimierte Verbrennungsluft aus dem zweiten Kompressor 3b in einen als Rekuperator ausgebildeten Abgaswärmetauscher 8 geleitet und von dort nach erfolgter Aufheizung durch indirekten Wärmetausch über eine Rohrleitung 11 in eine erste Brennkammer 5 geführt.

In die Brennkammer 5 gelangt durch die Brennstoffzuleitung 20 ein Teil eines Brennstoffs, der in einem Reaktor 7 durch eine endotherme Reaktion aus einem Ausgangsbrennstoff entstanden ist und in der Brennkammer 5 verbrannt wird. Das entstandene heiße Gasgemisch, das neben den Verbrennungsprodukten noch überschüssige Verbrennungsluft enthält, wird durch die Heißgaszuleitung 12 zur Kompressorantrieb-Gasturbineneinheit 2 geführt und unter Abgabe der für die Kompressoreinheit 3 erforderlichen Antriebsenergie teilweise entspannt und dabei etwas abgekühlt.

Dieses immer noch heiße Gasgemisch gelangt dann durch die Heißgaszuleitung 13 in eine zweite Brennkammer 6, in die über einen Abzweig der Brennstoffzuleitung 20 ebenfalls Brennstoff eingebracht und mit dem Luftüberschuß verbrannt wird, so daß das Abgas insgesamt wieder auf eine höhere Temperatur gebracht wird.

Das durch die Verbrennung entstandene heiße Abgas wird durch eine Heißgasleitung 14 auf eine Gasturbine 1, die die nutzbare mechanische Energie erzeugt, geleitet und von dort nach Entspannung durch die Abgasleitung 15 abgeleitet. Die Kompressorantrieb-Gasturbineneinheit 2 und die Gasturbine 1 können auf einer gemeinsamen Welle angeordnet und unter Umständen sogar zur Vereinfachung der gesamten Anlage als ein einziges Turbinenaggregat ausgebildet sein. Es ist auch möglich, bei mehreren Kompressorstufen diese teilweise von der Gasturbine 1 antreiben zu lassen. Damit kann eine optimale Abstimmung der Kompressoren und Turbinen aufeinander erfolgen.

Durch Eindüsung von z.B. Wasser oder Wasserdampf in die Brennkammern 5, 6 kann die adiabatische Flammentemperatur auf unter 1700°C und die Eintrittstemperatur in die Gasturbine 1 auf Werte von etwa 1250 °C, in manchen Fallen sogar auf noch tiefere Werte von bis zu 800°C, beschränkt werden, bei denen keine nennenswerten Mengen an Stickoxiden entstehen. In diesem Zusammenhang ist es ein großer Vorteil der Erfindung, daß die Bildung von Stickoxiden ohnehin bereits dadurch wesentlich vermindert wird, daß anstelle des Ausgangsbrennstoffes weitgehend der in der endothermen Reaktion entstandene umgewandelte Brennstoff mit höherem absolutem Heizwert verbrannt wird. Dabei ergibt sich nämlich von vornherein (je nach Luftüberschuß) eine adiabatische Flammentemperatur, die um 300 bis 550 Grad Celsius niedriger liegt als die adiabatische Flammentemperatur bei einer Verbrennung des Ausgangsbrennstoffes.

Bei Verwendung von zwei Brennkammern können die Maßnahmen zur gezielten Absenkung der Flammentemperatur auch auf die zweite Brennkammer 6 beschränkt werden, da die in der ersten Brennkammer 5 gebildeten Stickoxide durch die Wärmeeinwirkung bei der nachfolgenden zweiten Verbrennung weitgehend wieder zerfallen. Das bedeutet, daß in der ersten Verbrennung mit hohen Abgastemperaturen und somit für die Kompressorantrieb-Gasturbine günstigen Bedingungen im Hinblick auf einen möglichst hohen Turbinenwirkungsgrad gearbeitet werden kann, ohne daß dies letztlich zu höheren NOₓ-Gehalten führt. Die kontrollierte Temperaturführung ist also in erster Linie für die letzte Verbrennungsstufe von besonderer Bedeutung.

Die bei der Entspannung in der Turbine 1 erzeugte mechanische Energie steht an der Abtriebswelle 26 zur Nutzung zur Verfügung und kann z.B. für den nntrieb eines Generators G zur Erzeugung elektrischen Stroms eingesetzt werden. Das bei der Entspannung zwar etwas abgekühlte, aber immer noch heiße Abgas gelangt durch die Abgasleitung 15 in den Heizbereich des indirekt beheizten Reaktors 7 für die endotherme Reaktion.

Durch diese endotherme Reaktion, die z.B. als Dampfreformierung stattfinden kann, wird aus dem Ausgangsbrennstoff, der einen bestimmten absoluten Heizwert aufweist, ein neuer Brennstoff mit höherem absolutem Heizwert erzeugt. Für den Fall der Dampfreformierung von Erdgas, das z.B. durch die Brennstoffzuleitung 18 zugeführt wird, ist eine Dampfzuleitung 19 in den Reaktionsraum des Reaktors 7 eingezeichnet.

In der Regel wird es zweckmäßig sein, den Dampf mit dem Brennstoff vorher zu mischen. Der erzeugte neue Brennstoff, der aus einem Gemisch von H₂, CO, CO₂ nicht umgewandeltem CH₄ und Wasserdampf besteht, wird über die Zuleitung 20 vom Reaktionsraum in die Brennkammern 5 und 6 geführt und dort, wie oben beschrieben, verbrannt. Es ist selbstverständlich auch möglich, zur Optimierung der Verbrennungsvorgänge (Temperatur, Massenstrom) in den Brennkammern 5 und 6 dem höherwertigen Brennstoff einen Anteil des Ausgangsbrennstoffs zuzumischen und erst dann zu verbrennen. Dabei wird man zweckmäßigerweise ein Gemisch mit einem Anteil von mindestens 50 %, vorzugsweise sogar mehr als 80 % des umgewandelten Brennstoffs einsetzen. Je weniger umgewandelter Brennstoff enthalten ist, um so mehr wird tendenziell der Wirkungsgrad beeinträchtigt. Das Prinzip, daß der verbrannte Brennstoff insgesamt einen höheren Heizwert aufweist als der Ausgangsbrennstoff bleibt in jedem Fall erhalten. Ein Teil des höherwertigen Brennstoffs kann selbstverständlich auch aus dem Verfahren ausgekoppelt und in anderen Prozessen eingesetzt werden.

Bei der erwähnten Dampfreformierung von Erdgas (im wesentlichen CH₄) wird der absolute Heizwert des Brennstoffs um ca. 30 % erhöht. Im Falle einer Hydrierung des Ausgangsbrennstoffs Toluol beträgt die Heizwerterhöhung etwa 15 %. Anstelle einer Dampfreformierung kann die endotherme Reaktion z.B. auch als Dehydrogenierung vorgesehen sein. Diese würde bei Ethan als Ausgangsbrennstoff eine Heizwerterhöhung um etwa 10-20 % und bei Methanol sogar um etwa 20-30 % mit sich bringen. Ein weiteres Beispiel für eine endotherme Reaktion ist das Dampf-Cracking von beliebigen Kohlenwasserstoffverbindungen (z.B. Biogas, LPG, Naphtha, Kerosin usw.).

Gerade diese zuletztgenannte Möglichkeit ist deswegen interessant, weil sie die abwechselnde Nutzung einer Vielzahl unterschiedlicher Brennstoffe für die Erzeugung der mechanischen Energie gestattet, ohne daß die Gasturbine jeweils bei einem Brennstoffwechsel auf den neuen Brennstoff eingestellt werden muß.

Die endotherme Reaktion wird möglichst bei Temperaturen unterhalb 780°C oder besser noch unter 700°C ausgeführt. Das zur Beheizung benutzte Abgas verläßt den Heizbereich des Reaktors 7 durch die Abgasleitung 16 mit einer immer noch relativ hohen Temperatur und wird erfindungsgemäß z.B. zur Beheizung des Abgaswärmetauschers 8 eingesetzt, mit dem die komprimierte Verbrennungsluft aufgeheizt wird. Über die Abgasleitung 17 wird das abgekühlte Abgas schließlich aus dem Abgaswärmetauscher 8 abgeleitet.

Im Falle einer endothermen Reaktion, bei der der Einsatz von Dampf erforderlich ist, kann das erfindungsgemäße Verfahren insoweit als geschlossenes System betrieben werden, als dieser Dampf unter Ausnutzung der in den einzelnen heißen Volumenströmen im Prozeß vorhandenen Wärme erzeugbar ist. Zur Erzielung eines noch höheren Gesamtwirkungsgrads des Verfahrens kann zumindest ein Teil des benötigten Frischdampfes auch von beliebigen Dampfquellen von außen dem Reaktor 7 zugeführt werden. In das Anlagenschema sind fakultativ in gestrichelter Form an in Frage kommenden Stellen Dampferzeuger 21, 22, 23 eingezeichnet worden, die alternativ oder aber auch gleichzeitig betrieben werden können. Der Dampferzeuger 21 ist am Ende der Anlage in die Abgasleitung 17 eingebaut und kann daher nur Dampf mit relativ niedriger Temperatur erzeugen. An dieser Stelle könnte auch ein Wärmetauscher zur Vorwärmung des Ausgangsbrennstoffs (oder eines Brennstoff/Dampf-Gemisches) oder zur Speisewasservorwärmung für die Dampferzeugung angeordnet sein.

Ein weiterer möglicher Ort für einen Dampferzeuger 22 ist zwischen dem Abgaswärmetauscher 8 und dem Reaktor 7 in der Abgasleitung 16 angedeutet.

Eine bevorzugte Anordnung ist die des Dampferzeugers 23 zwischen der Kompressorantrieb-Gasturbineneinheit 2 und der zweiten Brennkammer 6, da diese Anordnung sich positiv im Sinne einer Verminderung der Verbrennungstemperatur in der Brennkammer 6 auswirkt. Wenn mehrere der Dampferzeuger 21 bis 23 gleichzeitig vorgesehen sind, können diese so hintereinander geschaltet werden, daß in einem (z.B. 21) Dampf mit relativ geringer Temperatur erzeugt wird und dieser in einem anderen (z.B. 22 undloder 23) auf eine höhere Temperatur überhitzt wird. Grundsätzlich kann auch die durch eine Zwischenkühlung bei der Kompression der Verbrennungsluft anfallende Abwärme im Kühler 4 zur Dampferzeugung mitgenutzt werden.

Im Anlagenschema der Fig. 1 ist der Reaktor 7 in die Abgasleitung 15, 16 der Gasturbine 1 eingeschaltet worden. Es ist jedoch auch möglich, die Reaktorbeheizung mit einem vorher im Verfahren anfallenden Heißgasstrom vorzunehmen. Der Reaktor 7 könnte daher grundsätzlich auch in die Leitungen 11, 12, 13 oder 14 eingeschaltet sein. Durch eine Temperaturerniedrigung des Heißgasstroms vermindert sich zwar der Turbinenwirkungsgrad der Turbinen 1 bzw. 2, aber die NOₓ-Bildung wird gleichzeitig auch vermindert. Daher müssen die Verfahrensparameter im Hinblick auf eine möglichst optimale Wirkung aufeinander abgestimmt werden.

Um ein Anfahren der Anlage aus dem kalten Zustand heraus zu ermöglichen, in dem weder ein Heißgasstrom noch genügend umgewandelter Brennstoff zur Verfügung stehen, kann alternativ oder gleichzeitig vorgesehen sein, daß in der Brennkammer 5 und im Heizbereich des Reaktors 7 zumindest zeitweilig der ursprüngliche Brennstoff (z.B. Erdgas) einleitbar und dort verbrennbar ist.

Die entsprechenden (nicht eingezeichneten) gesonderten Brennstoffzuleitungen können auch kurzzeitig zugeschaltet werden, wenn die zur Verfügung stehende Heizleistung in diesen Rggregaten vorübergehend nicht ausreichend sein sollte. Dadurch wird der Gesamtbetrieb der Anlage außerordentlich einfach regelbar. Im Sinne der besseren Regelbarkeit und einer Optimierung des Gesamtsystems kann zusätzlich noch vorgesehen sein, einen Teil der in der Gasturbine 2 für den Kompressorantrieb erzeugten Energie als nutzbare mechanische Energie nach außen abzugeben.

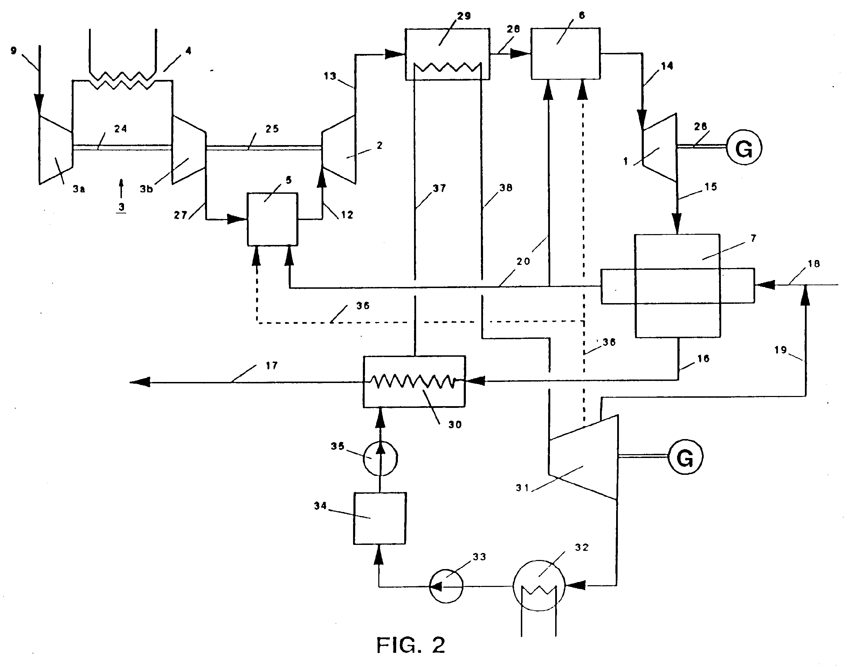

In Figur 2 ist die zweite Hauptvariante des erfindungsgemäßen Verfahrens schematisch dargestellt. Funktionsgleiche Anlagenteile sind dabei weitestgehend mit dem gleichen Bezugszeichen wie in Figur 1 versehen worden. Die zu Figur 1 gemachten Ausführungen gelten daher hierfür entsprechend, so daß im folgenden nur auf die vorhandenen Unterschiede näher eingegangen werden muß.

Der wesentliche Unterschied zu Figur 1 ist darin zu sehen, daß der als Rekuperator zur Verbrennungsluftvorwärmung ausgebildete Abgaswärmetauscher 8 fehlt und statt dessen ein System zur Erzeugung von überhitztem Dampf vorgesehen ist, welcher auf einer Dampfturbine 31 zur Erzeugung mechanischer Energie genutzt wird. Dieses Dampferzeugungssystem besteht aus einem Dampfkessel 30 und einem Dampfüberhitzer 29.

Der Dampfkessel 30 wird mit der Restwärme des aus der Gasturbine 1 austretenden Abgases, nachdem dieses den Heizraum des Reaktors 7 durchlaufen hat und dabei weitere Wärme abgegeben hat, beheizt. Der erzeugte Dampf gelangt durch die Rohrleitung 37 in den überhitzer 29 und von dort durch die Rohrleitung 38 zur Dampfeintrittsseite der Dampfturbine 31. Der entspannte Dampf wird von der Dampfturbine 31 in einen Kondensator 32 eingeleitet. Die Kondensatpumpe 33 fördert das kondensierte Wasser in eine Entgasungsvorrichtung 34.

Von dort gelangt das aufbereitete Kesselwasser mit Hilfe der Kesselspeisepumpe 35 über eine Rohrleitung in den Dampfkessel 30. Somit stellt das Dampf/Wassersystem ein weitgehend geschlossenes Kreislaufsystem dar. Eintretende Wasserverluste werden durch eine nicht dargestellte Wassereinspeisung ausgeglichen.

Diese Wasserverluste treten insbesondere in dem Fall ein, wenn, wie dies in Figur 2 als gestrichelte Leitung 36 optional dargestellt ist, hinter dem Hochdruckteil der Dampfturbine 31 Dampf ausgekoppelt und in die Brennkammern 5 und 6 zur Temperaturregelung und Massenstromerhöhung geführt wird. Die ebenfalls als optional anzusehende Rohrleitung 19 kann in gleicher Weise Dampf aus dem Kreislaufsystem auskoppeln und in den Reaktionsraum des Reaktors 7 leiten. Dieser Dampf könnte aber auch, wie zu Figur 1 bereits näher ausgeführt worden ist, an anderen Stellen der Anlage erzeugt oder von außen zugeführt werden. Das zur Auffüllung des Dampf/Wasserkreislaufs benötigte Wasser kann durch Rückgewinnung von Kondensat aus der Abgasleitung 17 gewonnen werden.

Der Vollständigkeit halber ist noch zu erwähnen, daß die Zuleitung der komprimierten Verbrennungsluft in die erste Brennkammer 5 in Figur 2 mit dem Bezugszeichen 27 und die Heißgasleitung von dem Dampfüberhitzer 29 zur zweiten Brennkammer 6 mit dem Bezugszeichen 28 bezeichnet sind.

Grundsätzlich gilt auch für die Verfahrensvariante gemäß Figur 2, daß der Reaktor 7 auch an anderer Stelle in die Heißgasleitungen eingebaut werden kann. Eine bevorzugte Lösung hierfür ist die, daß die Positionen des Reaktors 7 und des Dampfüberhitzers 29 miteinander vertauscht werden.

Eine weitere vorteilhafte Ausgestaltung der Erfindung, die allerdings in den Figuren 1 und 2 nicht dargestellt ist, betrifft die Nutzung des auf der Gasturbine 1 entspannten heißen Abgases. Dieses Rbgas enthält nämlich üblicherweise noch einen beträchtlichen O₂-Gehalt, da die Verbrennung mit O₂-überschuß durchgeführt wird. Es kann daher beispielsweise als Kathodengas zur O₂-Versorgung eines Brennstoffzellensystems, in dem elektrischer Strom erzeugt wird, benutzt werden.

Bei derartigen Brennstoffzellensystemen ist es vorteilhaft, das Kathodengas etwa mit einer Temperatur zuzuführen, die der Betriebstemperatur der Brennstoffzellen entspricht. Je nach Typ des Brennstoffzellensystems liegt die Betriebstemperatur auf einem anderen Niveau. Dementsprechend wird das Brennstoffzellensystem an einer geeigneten Stelle in die Abgasrohrleitung 15, 16, 17 eingeschaltet, d.h. die Abkühlung des entspannten Abgases bei der Beheizung anderer im erfindungsgemäßen Verfahren benötigter Medienströme (Luftvorwärmung, Dampferzeugung, Reformerbeheizung) wird etwa bis auf das der jeweils gewünschten Betriebstemperatur entsprechende Niveau durchgeführt und dann der Abgasstrom oder ein Teil des Abgasstroms in den Kathodenraum des Brennstoffzellensystems eingeleitet. Die Versorgung des Brennstoffzellensystems mit Brennstoff kann durch eine beliebige H₂-Gasquelle (z.B. Pipeline oder Gasspeicher) erfolgen. Es könnte auch ein Teilstrom eines im Reaktor 7 erzeugten H₂-reichen Gases in den Anodenraum der Brennstoffzelle geführt werden.

Die Wirksamkeit des erfindungsgemäßen Verfahrens wird im folgenden anhand eines Ausführungsbeispieles im einzelnen aufgezeigt. Dabei wurde eine Anlagenschaltung zugrundegelegt, die der Figur 1 entspricht. Der Wärmetauscher 21 wurde zur Erzeugung des Wasserdampfes und zur Vorwärmung von Erdgas eingesetzt, während der Wärmetauscher 22 zur überhitzung des Wasserdampf/Erdgas-Gemisches diente, bevor dieses Gemisch dem Dampfreformer 7 zugeführt wurde. Das als Ausgangsbrennstoff eingesetzte Erdgas stand mit einem Leitungsdruck von 20 bar zur Verfügung, und das eingesetzte Wasser hatte eine Temperatur von etwa 15 Grad Celsius. Das DampflKohlenstoff-Verhältnis (mol/mol) betrug 2,0. Im übrigen wurden die Verfahrensparameter entsprechend der nachfolgenden tabellarischen Aufstellung gewählt. Dabei sind zur Verdeutlichung die entsprechenden Bezugszeichen aus der Figur 1 genannt.
- Niederdruckkompressor (3a) Einlaßtemperatur 15° Celsius
   Auslaßtemperatur 180° Celsius
   Auslaßdruck 4,5 bar
- Hochdruckkompressor (3b) Einlaßtemperatur 25° Celsius
   Auslaßtemperatur 203° Celsius
   Auslaßdruck 20 bar
- Rekuperator (8)
   Temperaturanstieg der Verbrennungsluft 357° Celsius
   Temperaturabfall des Abgases 327° Celsius
- Brennkammer (5)
   Temperaturanstieg durch Verbrennung 690° Celsius
- Kompressorantrieb-Turbine (2) Einlaßtemperatur 1250° Celsius
   Druckverhältnis an der Turbine 2,8
   Auslaßtemperatur 970° Celsius
- Brennkammer (6)
   Temperaturanstieg durch Verbrennung 280° Celsius
- Gasturbine (1)
   Einlaßtemperatur 1250° Celsius
   Druckverhältnis an der Gasturbine 6,4
   Auslaßtemperatur 760° Celsius
- Generator (G) zur Erzeugung von elektr. Strom
   Leistung 3200 KWₑ
- Dampfreformer (7)
   Einlaßtemperatur des überhitzten Brennstoff/Dampfgemisches 550° Celsius
   Auslaßtemperatur des Abgases 647° Celsius
   Auslaßtemperatur des Produktgases 720° Celsius
- Brennstoff/Dampf-Überhitzer (22) Einlaßtemperatur
   Brennstoff/Dampf-Gemisch 249° Celsius
   Auslaßtemperatur des Abgases 610° Celsius
- Brennstoffvorwärmer/Dampferzeuger (21)
   Auslaßtemperatur des Abgases 227° Celsius

Bei der Dampfreformierung des im wesentlichen aus Methan bestehenden Erdgases wurden etwa 12 Prozent des Methan-Anteils nicht umgewandelt und in den Brennkammern 5 und 6 in der ursprünglichen Form verbrannt. Mit Ausnahme der Energie für die Kompression des Erdgases, das bereits mit einem ausreichenden Leitungsdruck zur Verfügung stand, wurde der gesamte Energiebedarf des Verfahrens aus dem Prozeß selbst entdeckt, so daß also keinerlei weitere Energiezufuhr von außen erfolgte. Der dabei erreichte Gesamtwirkungsgrad, d. h. das Verhältnis der erzeugten elektrischen Energie zur eingesetzten Energiemenge an Brennstoff auf der Basis des unteren Heizwertes betrug dabei 65 Prozent und lag damit in einer bisher nicht erreichten Größenordnung. Dabei zeichnete sich das in die Umgebung gegebene Abgas durch sehr niedrige Gehalte an Stickoxiden aus, ohne daß es hierzu einer zusätzlichen Entstickungsmaßnahme bedurfte.

Der große Vorteil, der durch die Erfindung erreicht wird, ist darin zu sehen, daß nicht nur eine drastische Steigerung des Wirkungsgrades bei der Erzeugung von mechanischer Energie aus Brennstoffen auf der Basis von Kohlenwasserstoffverbindungen ermöglicht wird, sondern daß dieses gleichzeitig auch noch mit einer Reduzierung des Schadstoffgehaltes in dem erzeugten Abgas verbunden werden kann. Hinzu kommt, daß wegen der besonderen Eignung der erfindungsgemäßen Anlagen für eine dezentrale Elektrizitätserzeugung die mit der herkömmlichen Großkraftwerkstechnik verbundenen Verluste durch Stromtransporte über größere Entfernungen und Transformierung des Stroms weitgehend vermeidbar sind.

## Patentansprüche

1. Verfahren zur kontinuierlichen Umwandlung von in einem Ausgangsbrennstoff auf der Basis von C-H-Verbindungen chemisch gebundener Energie in nutzbare mechanische Energie, bei dem
- Verbrennungsluft komprimiert wird,
- die Antriebsenergie für die Kompression der Verbrennungsluft gewonnen wird unter Einsatz einer Kompressorantrieb-Gasturbineneinheit, durch die mindestens der Volumenstrom der komprimierten Verbrennungsluft unter teilweiser Entspannung hindurchgefuhrt wird,
- das durch Verbrennung von Brennstoff mit der komprimierten Verbrennungsluft entstandene heiße Abgas auf einer Gasturbine, mit deren Hilfe mindestens ein Teil der nutzbaren mechanischen Energie erzeugt wird, entspannt wird und
- die Restwärme des aus der Gasturbine abströmenden Abgases zur Aufheizung eines im Verfahren benutzten Medienstromes eingesetzt wird,
- der Ausgangsbrennstoff durch eine endotherme Reaktion in einen umgewandelten Brennstoff mit einem höheren absoluten Heizwert umgesetzt wird,
- die Verbrennung mit oder ohne Zusatz von Ausgangsbrennstoff durch Einsatz des umgewandelten Brennstoffs erfolgt, wobei die bei der Umwandlung entstandenen einzelnen brennbaren Komponenten des umgewandelten Brennstoffs jeweils mengenmäßig ganz oder zumindest überwiegend noch im zu verbrennenden umgewandelten Brennstoff enthalten sind, und
- die Beheizung des Reaktionsraums für die endotherme Reaktion entweder durch die komprimierte Verbrennungsluft, die zuvor durch indirekten Wärmetausch von dem heißen Abgas aus der Verbrennung auf ein höheres Temperaturniveau aufgeheizt wurde, oder durch den Gesamtstrom des bei der Verbrennung entstandenen heißen Abgases selbst vor oder nach dessen Entspannung erfolgt.
dadurch gekennzeichnet,
daß die Verbrennung in zwei Stufen erfolgt, wobei das in der ersten Stufe erzeugte und einen hohen Luftüberschuß aufweisende heiße Abgas in der Kompressorantrieb-Gasturbineneinheit teilweise entspannt und danach mit weiterem Brennstoff in die zweite Verbrennungsstufe geführt wird und daß das in der zweiten Stufe erzeugte heiße Abgas in der Gasturbine, unter Abgabe von nutzbarer mechanischer Energie, entspannt wird.

2. Verfahren nach Anspruch 1,
dadurch gekennzeichnet
daß das heiße Abgas nach dem Entspannen über die Gasturbine zur Beheizung des Reaktionsraums für die endotherme Reaktion eingesetzt wird.

3. Verfahren nach Anspruch 1 oder 2,
dadurch gekennzeichnet,
daß die Restwärme des in der Gasturbine entspannten heißen Abgases für die Aufheizung der komprimierten Verbrennungsluft eingesetzt wird.

4. Verfahren nach den Ansprüchen 1 und 3
dadurch gekennzeichnet,
daß das heiße Abgas, bevor es auf der Kompressorantrieb-Gasturbineneinheit teilweise entspannt wird, zur Beheizung des Reaktionsraums für die endotherme Reaktion eingesetzt wird.

5. Verfahren nach den Ansprüchen 1 und 3
dadurch gekennzeichnet,
daß das heiße Abgas nach seiner teilweisen Entspannung auf der Kompressorantrieb-Gasturbineneinheit aber vor seiner Entspannung auf der Gasturbine zur Beheizung des Reaktionsraums für die endotherme Reaktion eingesetzt wird.

6. Verfahren nach einem der Ansprüche 1 bis 5
dadurch gekennzeichnet,
daß die Zusammensetzung der in die Verbrennungsstufen eingeführten Medien zur Verminderung der Stickoxidentstehung so eingestellt wird, daß eine Flammentemperatur von weniger als 1700°C (adiabatische Flammentemperatur) entsteht und die Eintrittstemperatur in die Gasturbine unter 1250°C liegt.

7. Verfahren nach Anspruch 6,
dadurch gekennzeichnet,
daß die Regelung der Austrittstemperatur unter Einsatz einer Eindüsung von Wasser oder Dampf in den Verbrennungsraum erfolgt.

8. Verfahren nach einem der Ansprüche 1, 2 oder 4 bis 7,
dadurch gekennzeichnet,
daß die Restwärme des auf der Gasturbine entspannten heißen Abgases zur Erzeugung von Dampf benutzt wird, welcher unter Ausnutzung des vorher auf höherem Temperaturniveau befindlichen heißen Abgasstromes überhitzt und zum Antrieb einer Dampfturbine eingesetzt wird, die ebenfalls nutzbare mechanische Energie erzeugt.

9. Verfahren nach Anspruch 8,
dadurch gekennzeichnet,
daß die überhitzung des erzeugten Dampfes vor dem Eintritt des heißen Abgasstromes in die zweite Verbrennungsstufe erfolgt und die Beheizung des Reaktionsraums für die endotherme Reaktion mit dem aus der Gasturbine austretenden heißen Abgasstrom erfolgt, bevor dieser für die Dampferzeugung eingesetzt wird.

10. Verfahren nach einem der Ansprüche 1 bis 9,
dadurch gekennzeichnet,
daß die endotherme Reaktion in Form einer Dampfreformierung von C-H-Verbindungen, insbesondere in Form einer Umwandlung von Erdgas oder Biogas (CH₄) in Synthesegas (CO und H₂) durchgeführt wird.

11. Verfahren nach einem der Ansprüche 1 bis 10,
dadurch gekennzeichnet,
daß die endotherme Reaktion bei einer Temperatur unterhalb 780°C, vorzugsweise unterhalb 700°C, insbesondere unterhalb 650°C durchgeführt wird.

12. Verfahren nach einem der Ansprüche 8 bis 11,
dadurch gekennzeichnet,
daß aus der Dampfturbine ein Teil des noch nicht vollständig entspannten Dampfes entnommen und in die Dampfreformierung geführt wird.

13. Anlage zur Durchführung des Verfahrens nach Anspruch 1, die außer einer Gasturbine (1) zur Erzeugung nutzbarer mechanischer Energie mindestens noch folgende Komponenten enthält:
- eine aus mindestens einem Kompressor (3a, 3b) bestehende Kompressoreinheit (3) für die Kompression von Verbrennungsluft,
- eine mit der Kompressoreinheit (3) antriebstechnisch gekoppelte Kompressorantrieb-Gasturbineneinheit (2), deren Gaseintrittsseite durch eine Rohrleitung (10, 11, 12, 27) mit der Gasaustrittsseite der Kompressoreinheit (3) verbunden ist,
- mindestens eine Kompressorantrieb-Gasturbineneinheit (2) angeordnete erste Brennkammer (5), in die die Rohrleitung (11 bzw. 27) für die Verbrennungsluft mündet,
- eine Heißgaszuleitung (12, 13, 14, 28) von der ersten Brennkammer (5) zur Gaseintrittsseite der Gasturbine (1) und
- eine Abgasleitung (15, 16) von der Gasaustrittsseite der Gasturbine (1) zu einem wärmetauscheraggregat (8 bzw. 30) für die Nutzung der Restwärme des Abgases,
- einen Reaktor (7) für eine endotherme chemische Reaktion, in der aus dem über eine Brennstoffzuleitung (18) zugeführten Ausgangsbrennstoff ein umgewandelter Brennstoff mit höherem absolutem Heizwert erzeugbar ist, wobei der Reaktor (7) mit seiner Heizung an eine der ein heißes Medium führenden Rohrleitungen (11,12,13,14,15) angeschlossen ist, und
- eine Brennstoffzuleitung (20) für den umgewandelten Brennstoff, die unmittelbar von dem Reaktor (7) zur ersten Brennkammer (5) geführt ist,
dadurch gekennzeichnet,
daß zwischen der Kompressorantrieb-Gasturbineneinheit (2) und der Gasturbine (1) eine zweite Brennkammer (6) in die Heißgaszuleitung (13,14) eingeschaltet ist und die zweite Brennkammer (6) ebenfalls durch eine Zuleitung (20) für den umgewandelten Brennstoff mit dem Reaktor (7) verbunden ist.

14. Anlage nach Anspruch 13,
dadurch gekennzeichnet,
daß der Reaktor (7) als Dampfreformieranlage ausgebildet ist.

15. Anlage nach einem der Ansprüche 13 oder 14,
dadurch gekennzeichnet,
daß die Kompressorantrieb-Gasturbineneinheit (2) und die Gasturbine (1) auf einer gemeinsamen Welle angeordnet sind.

16. Anlage nach einem der Ansprüche 13 bis 15,
dadurch gekennzeichnet,
daß der Reaktor (7) mit seiner Heizung an die aus der Gasturbine (1) herausführende Abgasleitung (15) angeschlossen ist und daß das Wärmetauschaggregat zur Nutzung der Abgasrestwärme, welches in die aus dem Reaktor (7) herausführende Abgasleitung (16) eingeschaltet ist, als Abgaswärmetauscher (8) ausgebildet ist, dessen wärmeaufnehmende Seite an die vom Kompressor (3) zur ersten Brennkammer (5) führende Rohrleitung (10, 11) für die komprimierte Verbrennungsluft angeschlossen ist.

17. Anlage nach einem der Ansprüche 13 bis 15,
dadurch gekennzeichnet,
daß das wärmetauschaggregat zur Nutzung der Abgasrestwärme in der Abgasleitung (15, 16) als Dampfkessel (30) ausgebildet ist, daß von dem Dampfkessel (30) eine Dampfleitung (37) zu einem Dampfüberhitzer (29) führt, welcher mit seiner Heizung in eine der ein heißes Abgas führenden Rohrleitungen (13, 15) eingeschaltet ist, und daß eine Dampfturbine (31) vorgesehen ist, deren Dampfeintrittsseite durch eine Dampfleitung (38) mit dem Dampfüberhitzer (29) verbunden ist.

18. Anlage nach einem der Ansprüche 13 bis 17,
dadurch gekennzeichnet,
daß ein Dampfsystem vorgesehen ist, durch das der in einem oder mehreren Dampferzeugern (21, 22, 23) erzeugte Dampf, insbesondere nach Mischung mit dem Ausgangsbrennstoff in den Reaktionsraum der Dampfreformieranlage (7) einleitbar ist.

19. Anlage nach einem der Ansprüche 13 bis 18,
dadurch gekennzeichnet,
daß die Brennkammern (5, 6) zur Regelung der Verbrennungstemperatur einen Anschluß zur Eindüsung von Wasser oder Dampf (Zuleitung 35) aufweisen.

## Claims

1. Process for continuously converting energy which is chemically bound in a starting fuel based on C-H compounds into useful mechanical energy, in which
- combustion air is compressed,
- the driving energy for compressing the combustion air is obtained by using a compressor drive-gas turbine unit, through which at least the volume flow of the compressed combustion air is passed while expanding in part,
- the hot exhaust gas produced by burning fuel with the compressed combustion air is expanded at a gas turbine, by means of which at least some of the useful mechanical energy is generated and
- the residual heat of the exhaust gas flowing out of the gas turbine is used to heat a media flow which is used in the process,
- the starting fuel is transformed by an endothermic reaction into a converted fuel with a higher absolute calorific value,
- the combustion takes place with or without the addition of starting fuel by using the converted fuel, and the individual combustible components of the converted fuel produced when the conversion takes place are in each case still contained entirely or at least predominantly in terms of quantity in the converted fuel which is to be burned, and
- the reaction space for the endothermic reaction is heated either by the compressed combustion air, which has been heated beforehand to a higher temperature level by an indirect heat exchange with the hot exhaust gas from the combustion, or by the total flow of the actual hot exhaust gas produced during combustion before or after expansion of the latter,
characterised in that the combustion takes place in two stages, with the hot exhaust gas which is generated in the first stage and has a high excess of air being expanded in part in the compressor drive-gas turbine unit and then introduced with further fuel into the second combustion stage, and that the hot exhaust gas generated in the second-stage is expanded in the gas turbine, while delivering useful mechanical energy.

2. Process according to claim 1, characterised in that the hot exhaust gas is used to heat the reaction space for the endothermic reaction following expansion via the gas turbine.

3. Process according to claim 1 or 2, characterised in that the residual heat of the hot exhaust gas which is expanded in the gas turbine is used to heat the compressed combustion air.

4. Process according to claims 1 and 3, characterised in that, before being expanded in part at the compressor drive-gas turbine unit, the hot exhaust gas is used to heat the reaction space for the endothermic reaction.

5. Process according to claims 1 and 3, characterised in that, after being expanded in part at the compressor drive-gas turbine unit, but before being expanded at the gas turbine, the hot exhaust gas is used to heat the reaction space for the endothermic reaction.

6. Process according to one of claims 1 to 5, characterised in that the composition of the media which is introduced into the combustion stages is adjusted to reduce the production of nitric oxide such that a flame temperature of less than 1700°C (adiabatic flame temperature) is produced and the temperature of entry into the gas turbine is below 1250°C.

7. Process according to claim 6, characterised in that the outlet temperature is regulated by injecting water or steam into the combustion chamber.

8. Process according to one of claims 1, 2 and 4 to 7, characterised in that the residual heat of the hot exhaust gas which is expanded at the gas turbine is used to generate steam, which is superheated by utilizing the hot exhaust gas flow previously at a higher temperature level and is used to drive a steam turbine which also generates useful mechanical energy.

9. Process according to claim 8, characterised in that the generated steam is superheated before the hot exhaust gas flow enters the second combustion stage, and the reaction space for the endothermic reaction is heated by the hot exhaust gas flow leaving the gas turbine before this is used to generate steam.

10. Process according to one of claims 1 to 9, characterised in that the endothermic reaction is carried out in the form of steam reforming of C-H compounds, in particular in the form of a conversion of natural gas or biogas (CH₄) into synthesis gas (CO and H₂).

11. Process according to one of claims 1 to 10, characterised in that the endothermic reaction is carried out at a temperature below 780°C, preferably below 700°C, in particular below 650°C.

12. Process according to one of claims 8 to 11, characterised in that some of the steam which has not yet completely expanded is taken from the steam turbine and introduced into the steam reforming process.

13. Device for carrying out the process according to claim 1 which, in addition to a gas turbine (1) for generating useful mechanical energy, comprises at least the following components:
- a compressor unit (3) consisting of at least one compressor (3a, 3b) for compressing combustion air,
- a compressor drive-gas turbine unit (2), which is coupled for drive purposes to the compressor unit (3) and the gas inlet side of which is connected to the gas outlet side of the compressor unit (3) by a pipeline (10, 11, 12, 27),
- at least one first combustion chamber (5) arranged....a compressor drive-gas turbine unit (2), into which chamber the pipeline (11 or 27) for the combustion air leads,
- a hot gas feed line (12, 13, 14, 28) leading from the first combustion chamber (5) to the gas inlet side of the gas turbine (1) and
- an exhaust gas line (15, 16) leading from the gas outlet side of the gas turbine (1) to a heat exchanger unit (8 or 30) for utilizing the residual heat of the exhaust gas,
- a reactor (7) for an endothermic chemical reaction, in which a converted fuel with a higher absolute calorific value can be generated from the starting fuel supplied via a fuel feed line (18), the reactor (7) with its heating system being connected to one of the pipelines (11, 12, 13, 14, 15) carrying a hot medium, and
- a fuel feed line (20) for the converted fuel which leads directly from the reactor (7) to the first combustion chamber (5),
characterised in that a second combustion chamber (6) is inserted in the hot gas feed line (13, 14) between the compressor drive-gas turbine unit (2) and the gas turbine (1), and the second combustion chamber (6) is also connected to the reactor (7) by a feed line (20) for the converted fuel.

14. Device according to claim 13, characterised in that the reactor (7) is formed as a steam reforming device.

15. Device according to one of claims 13 and 14, characterised in that the compressor drive-gas turbine unit (2) and the gas turbine (1) are arranged on a common shaft.

16. Device according to one of claims 13 to 15, characterised in that the reactor (7) with its heating system is connected to the exhaust gas line (15) leading out of the gas turbine (1), and that the heat exchanger unit, which is inserted in the exhaust gas line (16) leading out of the reactor (7), for utilizing the exhaust gas residual heat is formed as an exhaust gas heat exchanger (8), the heat-absorbing side of which is connected to the pipeline (10, 11), leading from the compressor (3) to the first combustion chamber (5), for the compressed combustion air.

17. Device according to one of claims 13 to 15, characterised in that the heat exchanger unit for utilizing the exhaust gas residual heat in the exhaust gas line (15, 16) is formed as a steam boiler (30), that a steam line (37) leads from the steam boiler (30) to a steam superheater (29), which is inserted with its heating system in one of the pipelines (13, 15) carrying a hot exhaust gas, and that a steam turbine (31) is provided whose steam inlet side is connected to the steam superheater (29) by a steam line (38).

18. Device according to one of claims 13 to 17, characterised in that a steam system is provided through which the steam generated in one or more steam generators (21, 22, 23) can be introduced into the reaction space of the steam reforming device (7), in particular after being mixed with the starting fuel.

19. Device according to one of claims 13 to 19, characterised in that the combustion chambers (5, 6) comprise a connection for the injection of water or steam (feed line 36) in order to regulate the combustion temperature.

## Revendications

1. Procédé pour transformer, de façon continue, de l'énergie liée chimiquement dans un combustible de départ sur la base de liaisons C-H, en énergie mécanique utilisable, dans lequel :
- de l'air de combustion est comprimé,
- l'énergie d'entraînement pour la compression de l'air de combustion est produite en utilisant une unité entraînement de compresseur-turbine à gaz, qui est traversée au moins par le courant volumique de l'air de combustion comprimé sous détente partielle,
- le gaz d'échappement chaud créé par la combustion du combustible avec l'air de combustion comprimé est détendu dans une turbine à gaz à l'aide de laquelle au moins une partie de l'énergie mécanique utilisable est engendrée, et
- la chaleur résiduelle du gaz d'échappement s'écoulant de la turbine à gaz est utilisée pour chauffer un courant de fluide utilisé dans le procédé,
- le combustible de départ est transformé par une réaction endothermique en un combustible transformé ayant un pouvoir calorifique absolu plus élevé,
- la combustion avec ou sans ajout du combustible de départ est effectuée en utilisant le combustible transformé, les composants individuels pouvant brûler, engendrés lors de la transformation, du combustible transformé étant à chaque fois encore contenus, en ce qui concerne les quantités, en totalité ou au moins de façon prépondérante dans le combustible transformé à brûler, et
- le chauffage de l'espace réactionnel pour la réaction endothermique est effectué soit par l'air de combustion comprimé qui a été chauffé précédemment, par échange thermique indirect du gaz d'échappement chaud provenant de la combustion, à un niveau de température plus élevé, soit par le courant global du gaz d'échappement chaud, créé lors de la combustion, lui-même avant ou après sa détente,
caractérisé en ce que la combustion a lieu en deux étapes, le gaz d'échappement chaud engendré dans la première étape et présentant un excès d'air élevé étant détendu partiellement dans l'unité entraînement de compresseur-turbine à gaz et, ensuite, étant amené avec d'autre combustible dans la seconde étape de combustion, et en ce que le gaz d'échappement chaud engendré dans la seconde étape est détendu dans la turbine à gaz, en fournissant de l'énergie mécanique utilisable.

2. Procédé selon la revendication 1,
caractérisé en ce que le gaz d'échappement chaud après la détente dans la turbine à gaz est utilisé pour chauffer l'espace réactionnel pour la réaction endothermique.

3. Procédé selon la revendication 1 ou 2,
caractérisé en ce que la chaleur résiduelle du gaz d'échappement chaud détendu dans la turbine à gaz est utilisée pour chauffer l'air de combustion comprimé.

4. Procédé selon les revendications 1 et 3,
caractérisé en ce que le gaz d'échappement chaud, avant qu'il ne soit détendu partiellement dans l'unité entraînement de compresseur-turbine à gaz, est utilisé pour chauffer l'espace réactionnel pour la réaction endothermique.

5. Procédé selon les revendications 1 et 3,
caractérisé en ce que le gaz d'échappement chaud après sa détente partielle dans l'unité entraînement de compresseur-turbine à gaz, mais avant sa détente dans la turbine à gaz, est utilisé pour chauffer l'espace réactionnel pour la réaction endothermique.

6. Procédé selon l'une des revendications 1 à 5,
caractérisé en ce que la composition des fluides introduits dans les étapes de combustion, pour diminuer la génération d'oxydes d'azote, est telle qu'une température de flamme de moins de 1700°C (température de flamme adiabatique) existe et que la température d'entrée dans la turbine à gaz est au-dessous de 1250°C.

7. Procédé selon la revendication 6,
caractérisé en ce que le réglage de la température de sortie est effectué en utilisant une pulvérisation d'eau ou de vapeur dans l'espace de combustion.

8. Procédé selon l'une des revendications 1, 2 ou 4 à 7,
caractérisé en ce que la chaleur résiduelle du gaz d'échappement chaud détendu dans la turbine à gaz est utilisée pour engendrer de la vapeur, laquelle est surchauffée en utilisant le courant de gaz d'échappement chaud se trouvant précédemment à un niveau plus élevé de température et est utilisée pour l'entraînement d'une turbine à vapeur, qui engendre de même de l'énergie mécanique utilisable.

9. Procédé selon la revendication 8,
caractérisé en ce que la surchauffe de la vapeur engendrée est effectuée avant l'entrée du courant de gaz d'échappement chaud dans la seconde étape de combustion et le chauffage de l'espace réactionnel pour la réaction endothermique est effectué avec le courant de gaz d'échappement chaud sortant de la turbine à gaz, avant que celui-ci soit utilisé pour engendrer de la vapeur.

10. Procédé selon l'une des revendications 1 à 9,
caractérisé en ce que la réaction endothermique est effectuée sous forme d'un reformage à la vapeur de liaisons C-H, en particulier sous forme d'une transformation de gaz naturel ou de biogaz (CH₄) en gaz de synthèse (CO et H₂).

11. Procédé selon l'une des revendications 1 à 10,
caractérisé en ce que la réaction endothermique est effectuée à une température au-dessous de 780°C, de préférence au-dessous de 700°C, en particulier au-dessous de 650°C.

12. Procédé selon l'une des revendications 8 à 11,
caractérisé en ce qu'une partie de la vapeur non encore complètement détendue est retirée de la turbine à vapeur et est amenée dans le reformage à la vapeur.

13. Installation pour la mise en oeuvre du procédé selon la revendication 1, qui, à part une turbine à gaz (1) pour engendrer de l'énergie mécanique utilisable, comporte encore au moins les composants suivants :
- une unité de compresseur (3), constituée d'au moins un compresseur (3a,3b), pour la compression de l'air de combustion,
- une unité entraînement de compresseur-turbine à gaz (2) couplée, par une technique d'entraînement, à l'unité de compresseur (3), dont le côté d'entrée de gaz est relié par une conduite (10,11,12,27) au côté de sortie de gaz de l'unité de compresseur (3),
- au moins une première chambre de combustion (5) associée à l'unité entraînement de compresseur-turbine à gaz (2), dans laquelle débouche la conduite (11 ou 27) pour l'air de combustion,
- une conduite de gaz chaud (12,13,14,28) de la première chambre de combustion (5) au côté d'entrée de gaz de la turbine à gaz (20), et
- une conduite de gaz d'échappement (15,16) du côté de sortie de gaz de la turbine à gaz (1) vers un appareillage d'échange thermique (8 ou 30) pour utiliser la chaleur résiduelle du gaz d'échappement,
- un réacteur (7) pour une réaction chimique endothermique, dans laquelle, à partir du combustible de départ amené par l'intermédiaire d'une conduite de combustible (18), un combustible transformé ayant un pouvoir calorifique plus élevé peut être engendré, le réacteur (7) étant raccordé, avec son dispositif de chauffage, à une des conduites (11,12,13,14,15) guidant un fluide chaud, et
- une conduite de combustible (20) pour le combustible transformé, qui est amené directement du réacteur (7) à la première chambre de combustion (5),
caractérisée en ce que, entre l'unité entraînement de compresseur-turbine à gaz (2) et la turbine à gaz (1), une seconde chambre de combustion (6) est montée dans la conduite de gaz chaud (13,14), et la seconde chambre de combustion (6) est reliée de même par une conduite (20) pour le combustible transformé au réacteur (7).

14. Installation selon la revendication 13,
caractérisée en ce que le réacteur (7) est réalisé en tant qu'installation de reformage à la vapeur.

15. Installation selon l'une des revendications 13 ou 14,
caractérisée en ce que l'unité entraînement de compresseur-turbine à gaz (2) et la turbine à gaz (1) sont agencées sur un arbre commun.

16. Installation selon l'une des revendications 13 à 15,
caractérisée en ce que le réacteur (7) avec son dispositif de chauffage est raccordé à la conduite de gaz d'échappement (15) sortant de la turbine à gaz (1), et en ce que l'appareillage d'échange thermique pour utiliser la chaleur résiduelle du gaz d'échappement, lequel est monté dans la conduite de gaz d'échappement (16) sortant du réacteur (7), est réalisé en tant qu'échangeur thermique (8) pour du gaz d'échappement, dont le côté recevant la chaleur est raccordé à la conduite (10,11), menant du compresseur (3) à la première chambre de combustion (5), pour l'air de combustion comprimé.

17. Installation selon l'une des revendications 13 à 15,
caractérisée en ce que l'appareillage d'échange thermique pour utiliser la chaleur résiduelle du gaz d'échappement dans la conduite de gaz d'échappement (15,16) est réalisé en tant que générateur de vapeur (30), en ce qu'une conduite de vapeur (37) mène du générateur de vapeur (30) à un surchauffeur de vapeur (29), lequel, avec son dispositif de chauffage, est monté dans une des conduites (13,15) guidant un gaz d'échappement chaud, et en ce qu'une turbine à vapeur (31) est prévue dont le côté d'entrée de vapeur est relié par une conduite de vapeur (38) au surchauffeur de vapeur (29).

18. Installation selon l'une des revendications 13 à 17,
caractérisée en ce qu'il est prévu un système de vapeur grâce auquel la vapeur, engendrée dans un ou plusieurs générateurs de vapeur (21,22,23), peut être introduite, en particulier après mélangeage avec le combustible de départ, dans l'espace réactionnel de l'installation de reformage à la vapeur (7).

19. Installation selon l'une des revendications 13 à 18,
caractérisée en ce que les chambres de combustion (5,6), pour régler la température de combustion, présentent un raccord pour pulvériser de l'eau ou de la vapeur (conduite 36).
